(19) Europäisches Patentamt
European Patent Office
Office européen des brevets

(11) EP 3 993 103 A1

(12) EUROPEAN PATENT APPLICATION
published in accordance with Art. 153(4) EPC

(43) Date of publication:
04.05.2022 Bulletin 2022/18

(51) International Patent Classification (IPC):
H01M 4/36 (2006.01)     H01M 4/38 (2006.01)
H01M 4/48 (2010.01)     H01M 4/58 (2010.01)

(21) Application number: 20832183.6

(52) Cooperative Patent Classification (CPC):
H01M 4/36; H01M 4/38; H01M 4/48; H01M 4/58;
Y02E 60/10

(22) Date of filing: 24.06.2020

(86) International application number:
PCT/JP2020/024744

(87) International publication number:
WO 2020/262436 (30.12.2020 Gazette 2020/53)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.06.2019 JP 2019120829

(71) Applicant: SANYO Electric Co., Ltd.
Daito-shi
Osaka 574-8534 (JP)

(72) Inventors:
• KOIZUMI, Isao
Osaka-shi, Osaka 540-6207 (JP)
• IWAMI, Yasunobu
Osaka-shi, Osaka 540-6207 (JP)
• MORIKAWA, Takaharu
Osaka-shi, Osaka 540-6207 (JP)

(74) Representative: Vigand, Philippe et al
Novagraaf International SA
Chemin de l'Echo 3
1213 Onex - Genève (CH)

(54) NEGATIVE ELECTRODE ACTIVE MATERIAL FOR SECONDARY BATTERIES, AND SECONDARY BATTERY

(57) The purpose of the present disclosure is to improve the cycle characteristics of a secondary battery that uses an Si-based active material containing Si. A negative electrode active material (Si-based active material) for secondary batteries according to one embodiment of the present invention comprises core particles, each of which is obtained by dispersing Si particles in a silicon oxide phase or a silicate phase, and a carbon material that adheres to the surfaces of the core particles. If a D/G ratio is the ratio of the peak intensity of the D-band to the peak intensity of the G-band in the Raman spectrum, the carbon material contains a first carbon material that has a D/G ratio of from 0.8 to 2 and a second carbon material that has a D/G ratio of from 0.01 to 0.5. The D/G ratio of the carbon material is from 0.2 to 0.9.

Figure 2

**Description**

TECHNICAL FIELD

The present disclosure relates to a negative electrode active material for secondary batteries and a secondary battery using the active material.

BACKGROUND ART

Si-based active materials containing Si have been known to enable to intercalate more lithium ions per unit volume than carbon-based active materials such as graphite. Therefore, by using the Si-based active materials as negative electrode active materials, an increase in battery capacity can be contemplated. Since the volume of the Si-based active material changes greatly with charge/discharge, on the other hand, the structure of a negative electrode mixture layer collapses when charge/discharge are repeated, and the contact between active material particles becomes weak, easily causing the electron conductivity between the active material particles to be reduced and then leading to the negative electrode capacity being lowered.

In view of this situation, it has been proposed that a conductive layer such as a carbon coating film on particle surfaces of a Si-based active material is formed to enhance electron conductivity of the particle surfaces. For example, Patent Literature 1 discloses a negative electrode active material composed of particle cores of a metal such as Si capable of forming a lithium alloy and a carbon layer covering the surfaces of the particle cores. Further, Patent Literature 2 discloses a negative electrode active material in which metal particles such as Si are embedded in a plurality of phases of carbon.

CITATION LIST

PATENT LITERATURE

PATENT LITERATURE 1: Japanese Unexamined Patent Application Publication No. 2000-215887
PATENT LITERATURE 2: Japanese Unexamined Patent Application Publication No. 2000-272911

SUMMARY

TECHNICAL PROBLEM

However, the conventional techniques including the techniques of Patent Literatures 1 and 2 still have room for improvement in the cycle characteristics of the battery. An object of the present disclosure is to improve cycle characteristics in a high-capacity secondary battery by using a Si-based active material.

SOLUTION TO PROBLEM

A negative electrode active material for secondary batteries according to the present disclosure is a negative electrode active material for secondary batteries including core particles in each of which Si particles are dispersed in a silicon oxide phase or a silicate phase and a carbon material adhered to the surfaces of the core particles, wherein when a ratio of a peak intensity of a D band to a peak intensity of a G band in a Raman spectrum is defined as a D/G ratio, the carbon material includes a first carbon material having a D/G ratio of from 0.8 to 2 and a second carbon material having a D/G ratio of from 0.01 to 0.5, and the D/G ratio of the carbon material is from 0.2 to 0.9.

The secondary battery according to the present disclosure comprises a positive electrode, a negative electrode including the aforementioned negative electrode active material, and an electrolyte.

ADVANTAGEOUS EFFECTS OF INVENTION

According to the negative electrode active material according to the present disclosure, the cycle characteristics of the secondary battery can be improved. The secondary battery by using the negative electrode active material according to the present disclosure has, for example, a high capacity and excellent cycle characteristics.

BRIEF DESCRIPTION OF DRAWINGS

FIG. 1 is a cross sectional plan view of a non-aqueous electrolyte secondary battery that is an example of an embodiment.
FIG. 2 is a cross sectional plan view of a negative electrode active material that is an example of an embodiment.

DESCRIPTION OF EMBODIMENTS

As described above, a Si-based active material containing Si can intercalate more lithium ions per unit volume than a carbon-based active material and contributes to increasing battery capacity, however, due to the large volume change accompanying charge/discharge, there is a problem in that cycle characteristics of a battery are deteriorated by using the Si-based active material. The present inventors have found, as a result of diligent experimentation to solve such a problem, that by using a negative electrode active material in which two types of carbon materials are adhered to the surfaces of core particles containing Si and a D/G ratio in a Raman scattering peak (a ratio of a peak intensity of a D band to a peak intensity of a G band in a Raman spectrum), is adjusted to from 0.2 to 0.9, the cycle characteristics are specifically improved.

In general, the first carbon material having the D/G ratio of from 0.8 to 2 in the Raman spectrum largely includes diamond structures. On the other hand, the second carbon material having the D/G ratio of from 0.01 to 0.5 in the Raman spectrum largely includes graphite structures and is excellent in electron conductivity (conductivity). The first carbon material is considered to improve the conductivity of the surfaces of the core particles and also function as a binder for adhering the second carbon material to the surfaces of the core particles.

The negative electrode active material according to the present disclosure in which the two types of carbon materials described above are adhered to the surfaces of the core particles containing Si, has higher conductivity and a smaller volume change accompanying charge/discharge than conventional Si-based active materials. Therefore, it is considered that by using the negative electrode active material according to the present disclosure, the structure of a negative electrode mixture layer is inhibited from collapsing and the conductive path between the particles of the negative electrode active material is favorably maintained, resulting in the cycle characteristics being improved.

An example of embodiments of a secondary battery according to the present disclosure will be described in detail below. In the following, a cylindrical battery in which a wound electrode assembly 14 is housed in a bottomed cylindrical outer can 16 will be illustrated, but an outer body is not limited to a cylindrical outer can, and may be, for example, a square outer can or an outer body formed of a laminated sheet including a metal layer and a resin layer. Further, the electrode assembly may be a wound electrode assembly formed in a flat shape, or may be a stacked electrode assembly in which a plurality of positive electrodes and a plurality of negative electrodes are alternately stacked with a separator interposed therebetween.

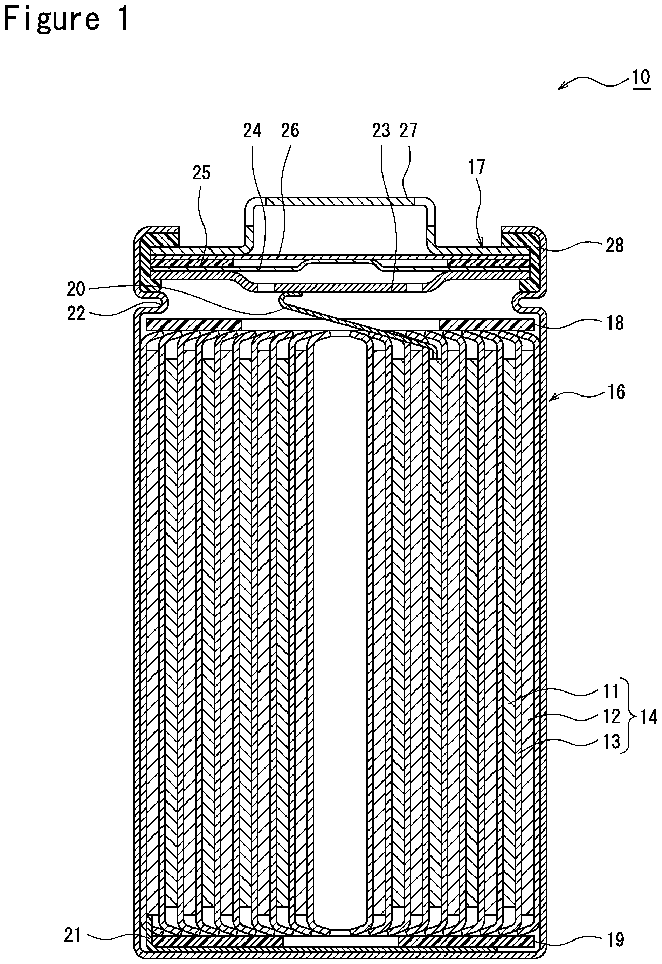

FIG. 1 is a sectional view of a secondary battery 10 that is an example of an embodiment. As illustrated in FIG. 1, the secondary battery 10 comprises a wound electrode assembly 14, an electrolyte, and an outer can 16 for housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The outer can 16 is a bottomed cylindrical metal container having an opening on one side in the axial direction, and the opening of the outer can 16 is clogged up by a sealing assembly 17. In the following, for convenience of explanation, the sealing assembly 17 side of the secondary battery 10 is an upper side, and the bottom side of the outer can 16 is a lower side.

The electrolyte is a non-aqueous electrolyte including, for example, a non-aqueous solvent and an electrolyte salt dissolved in the non-aqueous solvent. As the non-aqueous solvents, esters, ethers, nitriles, amides, a mixed solvent of two or more thereof, and the like may be used. The non-aqueous solvent may contain a halogen substituent such as fluoroethylene carbonate in which at least a portion of hydrogen in the solvent is substituted with a halogen atom such as fluorine. As the electrolyte salt, for example, a lithium salt such as $LiPF_6$ is used. In the electrolyte salt, from 1 to 5% by mass of vinylene carbonate (VC) may be added thereto. The electrolyte is not limited to a liquid non-aqueous electrolyte, and may be a solid electrolyte or an aqueous electrolyte.

The positive electrode 11, the negative electrode 12, and the separator 13, constituting the electrode assembly 14, are all belt-shaped long bodies, and are wound in a spiral shape to be alternately stacked in the radial direction of the electrode assembly 14. Further, the electrode assembly 14 has a positive electrode lead 20 connected to the positive electrode 11 by welding or the like, and a negative electrode lead 21 connected to the negative electrode 12 by welding or the like. The negative electrode 12 is formed to be one size larger than the positive electrode 11 in order to prevent lithium from precipitating. Two separators 13 are formed at least one size larger than the positive electrode 11, and are arranged so as to sandwich the positive electrode 11, for example.

Insulating plates 18 and 19 are arranged above and below the electrode assembly 14, respectively. In the example shown in FIG. 1, the positive electrode lead 20 connected to the positive electrode 11 extends to the sealing assembly 17 side through a through hole of the insulating plate 18, and the negative electrode lead 21 connected to the negative electrode 12 passes through the outside of the insulating plate 19 and extends to the bottom side of the outer can 16. The positive electrode lead 20 is connected to the lower surface of an internal terminal plate 23 of the sealing assembly 17 by welding or the like, and a cap 27 that is a top plate of the sealing assembly 17 and is electrically connected to the internal terminal plate 23, serves as a positive electrode terminal. The negative electrode lead 21 is connected to the inner surface of the bottom of the outer can 16 by welding or the like, and the outer can 16 serves as a negative electrode terminal.

A gasket 28 is arranged between the outer can 16 and the sealing assembly 17 to secure airtightness inside the battery. The outer can 16 has a grooved portion 22, a part of the side surface of which protrudes inward, supporting the sealing assembly 17. The grooved portion 22 is preferably formed in an annular shape along the circumferential direction of the outer can 16, and supports the sealing assembly 17 on the upper surface of the grooved portion 22. The sealing assembly 17 is fixed to the upper portion of the outer can 16 by the grooved portion 22 and an opening end portion of the outer can 16 crimped to the sealing assembly 17.

The sealing assembly 17 has a structure in which the internal terminal plate 23, a lower vent member 24, an insulating member 25, an upper vent member 26, and the cap 27 are stacked in this order from the electrode assembly 14 side. Each member constituting the sealing assembly 17 has, for example, a disk shape or a ring shape, and each member except the insulating member 25 is electrically connected to one another. The lower vent member 24 and the upper vent member 26 are connected at their respective central portions, and the insulating member 25 is interposed between the respective peripheral portions. When the internal pressure of the battery rises due to abnormal heat generation, the lower vent member 24 deforms and breaks so as to push the upper vent member 26 toward the cap 27 side, so that the current path between the lower vent member 24 and the upper vent member 26 is blocked. As the internal pressure further rises, the upper vent member 26 breaks and a gas is discharged from the opening portion of the cap 27.

Hereinafter, the positive electrode 11, the negative electrode 12, and the separator 13 constituting the electrode assembly 14, will be described in detail, and in particular, the negative electrode active material (Si-based active material 30) included in the negative electrode 12 will be described in detail.

[Positive Electrode]

The positive electrode 11 has a positive electrode core and a positive electrode mixture layer arranged on the surface of the positive electrode core. As the positive electrode core, a metal foil stable in a potential range of the positive electrode 11 such as aluminum or an aluminum alloy, a film in which the metal is arranged on the surface layer, or the like, can be used. The positive electrode mixture layer includes a positive electrode active material, a conductive agent, and a binder, and is preferably arranged on both sides of the positive electrode core excluding the exposed core portion where the positive electrode lead 20 is connected. The positive electrode 11 can be fabricated by for example, coating the surface of the positive electrode core with a positive electrode mixture slurry including the positive electrode active material, the conductive agent, the binder and the like, drying the coated film, and then compressing it to form positive electrode mixture layers on both sides of the positive electrode core.

The positive electrode active material is composed mainly of a lithium-containing transition metal composite oxide. Examples of the metal element contained in the lithium-containing transition metal composite oxide includes Ni, Co, Mn, Al, B, Mg, Ti, V, Cr, Fe, Cu, Zn, Ga, Sr, Zr, Nb, In, Sn, Ta, and W. An example of a suitable lithium-containing transition metal composite oxide is a composite oxide containing at least one of the group consisting of Ni, Co, and Mn. Specific examples thereof include a composite oxide containing Ni, Co and Mn, and a composite oxide containing Ni, Co and Al.

As the conductive agent included in the positive electrode mixture layer, a carbon material such as carbon black, acetylene black, Ketjen Black, or graphite can be exemplified. As the binder included in the positive electrode mixture layer, a fluororesin such as polytetrafluoroethylene (PTFE) or polyvinylidene difluoride (PVdF), polyacrylonitrile (PAN), a polyimide resin, an acrylic resin, or a polyolefin resin can be exemplified. These resins may be combined for use with cellulose derivatives such as carboxymethyl cellulose (CMC) or a salt thereof, polyethylene oxide or the like.

[Negative Electrode]

The negative electrode 12 has a negative electrode core and a negative electrode mixture layer arranged on the surface of the negative electrode core. As the negative electrode core, a metal foil stable in a potential range of the negative electrode 12 such as copper or a copper alloy, a film in which the metal is arranged on the surface layer, or the like can be used. The negative electrode mixture layer includes a negative electrode active material and a binder, and is preferably arranged on both sides of the negative electrode core excluding the exposed core portion where the negative electrode lead 21 is connected. The negative electrode 12 can be fabricated by for example, coating the surface of the negative electrode core with a negative electrode mixture slurry including the negative electrode active material, the binder and the like, drying the coated film, and then compressing it to form negative electrode mixture layers on both sizes of the negative electrode core.

As the binder included in the negative electrode mixture layer, a fluorine-containing resin such as PTFE or PVdF, PAN, a polyimide, an acrylic resin, a polyolefin or the like may be used as in the case of the positive electrode 11, however, rubber-based binders such as styrene-butadiene rubber (SBR) is preferably used. Further, the negative electrode mixture layer may include CMC or a salt thereof, a polyacrylic acid (PAA) or a salt thereof, PVA, or the like. CMC or a salt thereof functions as a thickener for adjusting the viscosity range of the negative electrode mixture slurry to an appropriate range, and also functions as a binder as in the case of SBR.

The negative electrode mixture layer includes a Si-based active material containing Si as the negative electrode active material. As the negative electrode active material, the Si-based active material may be used alone, or a carbon-based active material may be used in combination. When the carbon-based active material is combined for use, the compounding ratio of the Si-based active material and the carbon-based active material in the negative electrode mixture layer is preferably from 1:99 to 30:70 in terms of mass ratio and more preferably from 2:98 to 10:90. The compounding ratio being within the above range facilitates to contemplate high capacity while maintaining satisfactory cycle characteristics.

A suitable carbon-based active material is natural graphite such as scaly graphite, massive graphite and earthy graphite, and artificial graphite such as massive artificial graphite (MAG) and graphitized mesophase carbon microbeads (MCMB). The volume-based median diameter of the graphite particle (hereinafter referred to as "D50") is, for example, from 5 μm to 30 μm and preferably from 18 μm to 24 μm. D50 is a particle diameter having a volume integrated value of 50% in the particle diameter distribution measured by a laser diffraction/scattering method, and is also called a 50% particle diameter or a median diameter.

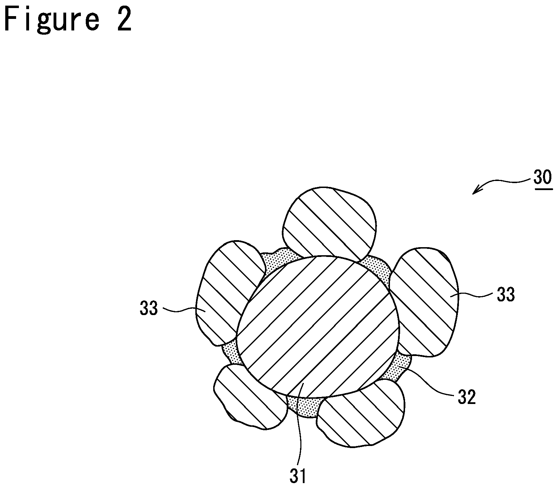

FIG. 2 is a sectional view schematically illustrating a Si-based active material 30 that is an example of the embodiment. As illustrated in FIG. 2, the Si-based active material 30 includes a core particle 31 and a carbon material adhered to the surfaces of the core particle 31, and the carbon material includes two types of carbon materials (a first carbon material 32, a second carbon material 33). The core particle 31 is a particle in which Si particles are dispersed in a silicon oxide phase or a silicate phase. As the silicate, lithium silicate is suitable. The core particle 31 is a particle, for example, in which D50 is smaller than that of a graphite particle. D50 of the core particle 31 is preferably from 1 μm to 20 μm and more preferably from 4 μm to 15 μm.

The core particle 31 has, for example, a sea-island structure in which fine Si particles are substantially uniformly dispersed in an amorphous silicon oxide matrix, which is represented by the general formula $SiO_x$ ($0.5 \leq x \leq 1.6$). Alternatively, the core particle 31 has a sea-island structure in which fine Si particles are substantially uniformly dispersed in a matrix of lithium silicate represented by the general formula $Li_{2z}SiO_{(2+z)}$ ($0 < z < 2$). The lithium silicate phase preferably includes $Li_2SiO_3$ ($Z = 1$) or $Li_2Si_2O_5$ ($Z = 1/2$) as a main component from the viewpoints of stability, facilitation of production, lithium ion conductivity and the like. The silicon oxide phase and the silicate phase are formed by aggregation of, for example, particles finer than Si particles.

The content of the Si particles dispersed in the silicon oxide phase or the silicate phase is preferably from 35 to 75% by mass based on the mass of the core particles 31 from the viewpoint of achieving both battery capacity and cycle characteristics. For example, if the content of the Si particles is too low, the charging/discharging capacity is decreased, and if the content of the Si particles is too high, the exposed Si particles that are not covered by the matrix phase partially come into contact with the electrolytic solution, resulting in reduction in cycle characteristics. The average particle diameter of the Si particle is generally 500 nm or less, preferably 200 nm or less, and more preferably 50 nm or less before charge/discharge. After charge/discharge, it is preferably 400 nm or less and more preferably 100 nm or less.

As described above, the carbon material including the first carbon material 32 and the second carbon material 33 is adhered to the surface of the core particle 31. The first carbon material 32 and the second carbon material 33 are carbon materials having different physical properties from each other, and the D/G ratios in their respective Raman spectra are from 0.8 to 2 and from 0.01 to 0.5. Moreover, the D/G ratio of the carbon material adhered to the surface of the core particle 31 in the Raman spectrum is from 0.2 to 0.9. The Si-based active material 30 in which the carbon material having a D/G ratio adjusted in the above range is adhered to the surface, has the functions of maintaining a favorable conductive path in the negative electrode mixture layer and improving the cycle characteristics of the battery. The Si-based active material 30 may include three or more types of carbon materials provided that the object of the present disclosure is not impaired.

In the Raman spectra of the first carbon material 32 and the second carbon material 33, the peak of D-band derived from the diamond structure in the vicinity of 1330 cm$^{-1}$ and the peak of G-band derived from the graphite structure in the vicinity of 1580 cm$^{-1}$ appear, respectively. The D/G ratio is an intensity ratio of the peaks ($I_{1330}/I_{1580}$) and can be used as an index indicating the proportion of the diamond structure and the graphite structure included in the carbon material. The higher the ratio is, the more the diamond structures exist.

Since Raman scattering occurs on a surface of a substance, the D/G ratio of the Si-based active material 30 is an index indicating the proportion of the diamond structure and the graphite structure on the surface of the active material particle. The D/G ratio of the Si-based active material 30 mainly depends on the amounts of the first carbon material 32 and the second carbon material 33 present on the surface of the active material particle, and the D/G ratio of each carbon material. For example, the higher the compounding ratio of the second carbon material 33 is, the lower the D/G ratio of the Si-based active material 30 tends to be.

The first carbon material 32 has a D/G ratio of from 0.8 to 2 and preferably from 0.9 to 1.4 in the Raman spectrum, and includes more diamond structures than the second carbon material 33. The second carbon material 33 has a D/G ratio of from 0.01 to 0.5 and preferably from 0.02 to 0.48 in the Raman spectrum, and has more graphite structures than the second carbon material 33 and also has higher conductivity. Moreover, the second carbon material 33 is a material that intercalates and deintercalates lithium ions, and functions as a negative electrode active material.

The first carbon material 32 is more likely to adhere to the surface of the core particle 31 than the second carbon material 33, improves the conductivity of the Si-based active material 30, and also serves as a binder for the second carbon material 33. The first carbon material 32 present on the surface of the core particle 31 facilitates the second carbon material 33 to adhere to the surface of the core particle 31, effectively improving the conductivity of the Si-based active material 30.

The first carbon material 32 is preferably present in an amount of from 5 to 20% by mass and more preferably from 5 to 15% by mass, based on the mass of the Si-based active material 30. Moreover, the second carbon material 33 is preferably present in an amount of from 5 to 70% by mass and more preferably from 10 to 70% by mass based on the mass of the Si-based active material 30. The content of the second carbon material 33 may be equal to or less than the content of the first carbon material 32, but is preferably higher than the content of the first carbon material 32.

The D/G ratio of the carbon material adhered to the surface of the core particle 31 of the Si-based active material 30, in the Raman spectrum is from 0.2 to 0.9 and preferably from 0.2 to 0.6. The D/G ratio of the Si-based active material 30 can be changed by adjusting the compounding ratio of the two types of carbon materials as described above. In the Si-based active material 30, the mass ratio of the core particle 31, the first carbon material 32, and the second carbon material 33 is, for example, the first carbon material 32 < the second carbon material 33 < the core particle 31, or the first carbon material 32 < the core particle 31 < the second carbon material 33. The core particle 31 is preferably present in an amount of from 10 to 85% by mass and more preferably from 20 to 70% by mass based on the mass of the Si-based active material 30.

As illustrated in FIG. 2, the first carbon material 32 is present in a layer on the surface of the core particle 31. On the other hand, the second carbon material 33 is in a particulate form. For example, the first carbon material 32 is formed over a wide area on the surface of the core particle 31, and the second carbon material 33 is dotted on the surface of the core particle 31. Both the first carbon material 32 and the second carbon material 33 are present on the particle surface of the Si-based active material 30.

The shape of the second carbon material 33 may be any of granular (spherical), massive, needle-like, and fibrous shapes. Examples of the second carbon material 33 include natural graphite, artificial graphite, graphene, carbon fibers, carbon nanotubes (CNT), highly oriented pyrolytic graphite (HOPG), and mixtures thereof.

The Si-based active material 30 can be produced by, for example, adhering two types of carbon materials to the surfaces of the core particles 31 by mixing the core particles 31, the first carbon material 32, and the second carbon material 33, and then heat treating the mixture. As the first carbon material 32, pitches (petroleum pitch, coal pitch) and carbonizable resins such as a phenol resin are used. Further, the first carbon material 32 may be formed on the surface of the core particle 31 by a CVD method using acetylene, methane or the like. A carbon-based active material such as graphite may be used as the second carbon material 33.

A conventionally known mixer can be used for mixing the core particles 31 and the carbon material, and examples thereof include container rotary mixers such as a planetary ball mill, an air flow stirrer, a screw blender, and a kneader. The aforementioned heat treatment is carried out, for example, in an inert atmosphere at a temperature of from 700°C to 900°C for several hours.

[Separator]

A porous sheet having ion permeability and insulating property is used for the separator 13. Specific examples of the porous sheet include a microporous thin membrane, a woven fabric, and a non-woven fabric. As materials for the separator 13, olefin resins such as polyethylene and polypropylene, cellulose and the like are suitably used. The separator 13 may have either a single-layer structure or a multilayer structure. A heat-resistant layer or the like may be formed on the surface of the separator 13.

EXAMPLES

Hereinafter, the present disclosure will be further described with reference to Examples, but the present disclosure is not limited to these Examples.

<Comparative Example 1>

[Production of Si-Based Active Material]

The Si-containing particles (core particles) and the first carbon material were mixed at a mass ratio of 98:2 by using a planetary ball mill (P-7 type manufactured by FRITSCH GmbH) at 100 rpm for 1 hour, and composite forming treatment was carried out in which the first carbon material was adhered to the surfaces of the Si-containing particles. The particles subjected to the composite-forming treatment were heat-treated in an inert atmosphere at 800°C for 5 hours to obtain a Si-based active material.

The Si-containing particles having a D50 of 10 $\mu$m in which fine particles of Si were dispersed in the lithium silicate phase were used. Further, as the first carbon material, a petroleum pitch having a D/G ratio of 0.9 in the Raman spectrum was used. The D/G ratio of the carbon material adhered to the core particles in the Raman spectrum was 0.9. Table 1 shows each of the D/G ratios of the carbon material adhered to the core particles, and the first carbon material (the same applies to the following Comparative Examples and Examples). The Raman spectrum was measured by using NRS-5100 manufactured by JASCO Corporation. The D/G value of the single carbon material in the Raman spectrum was determined by heat-treating the carbon material alone at 800°C and carrying out the Raman measurement.

[Fabrication of Negative Electrode]

As the negative electrode active material, a mixture in which the aforementioned Si-based active material and natural graphite having a D50 of 22 $\mu$m were mixed at a mass ratio of 5:95, was used. The negative electrode active material, carboxymethyl cellulose (CMC), and styrene-butadiene rubber (SBR) were mixed at a solid content mass ratio of 100:1.5:1.0, and water was used as a dispersion medium to prepare a negative electrode mixture slurry having a solid content concentration of 50% by mass. Next, both sides of the negative electrode core composed of copper foils were coated with the negative electrode mixture slurry by a doctor blade method, the coated film was dried and compressed, and then cut into a predetermined electrode size to fabricate a negative electrode in which the negative electrode mixture layers were formed on both sides of the negative electrode core.

[Preparation of Electrolytic Solution]

To a solvent in which ethylene carbonate (EC) and methyl ethyl carbonate (MEC) were mixed at a volume ratio of 30:70, lithium hexafluorophosphate (LiPF$_6$) was dissolved at a concentration of 1.4 mol/L. Further, vinylene carbonate (VC) was dissolved at a concentration of 2% by mass based on the total amount of the electrolytic solution to prepare an electrolytic solution.

[Battery Fabrication]

Metal Li and the aforementioned negative electrode were wound via a separator composed of a polyethylene microporous membrane and then were formed into a flat shape, and a polypropylene tape was adhered to the outermost periphery to fabricate a flat wound electrode assembly. In a glove box under an argon atmosphere, the aforementioned electrode assembly and a non-aqueous electrolyte were housed in an outer body formed of a laminated sheet including an aluminum alloy layer, then the inside of the outer body was evacuated to impregnate the separator with the electrolytic solution, and the opening portion of the outer body was sealed to fabricate a non-aqueous electrolyte secondary battery.

<Comparative Example 2>

A secondary battery was fabricated by the same method as in Comparative Example 1 except that 2% by mass of the first carbon material was adhered to the surfaces of the Si-containing particles by a chemical vapor deposition method (CVD) in the production of the Si-based active material.

<Comparative Example 3>

A secondary battery was fabricated by the same method as in Comparative Example 1 except that a second carbon material was used instead of the first carbon material, the Si-containing particles and the second carbon material were mixed at a mass ratio of 90:10, and the second carbon material was adhered to the surfaces of the Si-containing particles by the planetary ball mill, in the production of the Si-based active material. As the second carbon material, natural graphite having a D50 of 3 $\mu$m was used.

<Comparative Example 4>

A secondary battery was fabricated by the same method as in Comparative Example 3 except that a mixture of natural graphite having a D50 of 22 $\mu$m and artificial graphite was used as the second carbon material.

<Comparative Example 5>

A secondary battery was fabricated by the same method as in Comparative Example 3 except that pyrolytic graphite having a D50 of 30 $\mu$m was used as the second carbon material.

<Comparative Example 6>

A secondary battery was fabricated by the same method as in Comparative Example 1 except that the Si-containing particles, the first carbon material, and the second carbon material were mixed at a mass ratio of 88:10:2 in the production of the Si-based active material. As the second carbon material, the same material as that in Comparative Example 4 (a mixture of natural graphite and artificial graphite) was used.

<Example 1>

A secondary battery was fabricated by the same method as in Comparative Example 1 except that the Si-containing particles, the first carbon material, and the second carbon material were mixed at a mass ratio of 85:10:5 in the production of the Si-based active material. As the second carbon material, the same material as that in Comparative Example 3 (natural graphite) was used.

<Example 2>

A secondary battery was fabricated by the same method as in Comparative Example 6 except that the Si-containing particles, the first carbon material, and the second carbon material were mixed at a mass ratio of 81:10:9 in the production of the Si-based active material.

<Example 3>

A secondary battery was fabricated by the same method as in Comparative Example 6 except that the Si-containing particles, the first carbon material, and the second carbon material were mixed at a mass ratio of 85:10:5 in the production of the Si-based active material.

<Example 4>

A secondary battery was fabricated by the same method as in Comparative Example 6 except that the Si-containing particles, the first carbon material, and the second carbon material were mixed at a mass ratio of 70:10:20 in the production of the Si-based active material.

<Example 5>

A secondary battery was fabricated by the same method as in Comparative Example 6 except that the Si-containing particles, the first carbon material, and the second carbon material were mixed at a mass ratio of 20:10:70 in the production of the Si-based active material.

<Example 6>

A secondary battery was fabricated by the same method as in Comparative Example 1 except that the Si-containing particles, the first carbon material, and the second carbon material were mixed at a mass ratio of 40:10:50 in the production of the Si-based active material. As the second carbon material, the same material as that in Comparative Example 5 (pyrolytic graphite) was used.

<Example 7>

A secondary battery was fabricated by the same method as in Example 6 except that the mass ratio of the Si-containing particles, the first carbon material, and the second carbon material was 20:10:70.

<Example 8>

A secondary battery was fabricated in the same manner as in Comparative Example 1 except that the first carbon material was adhered to the surfaces of the Si-containing particles mixed with the second carbon material by the CVD method so that the mass ratio of the Si-containing particles, the first carbon material, and the second carbon material was 70:10:20 in the production of the Si-based active material.

<Example 9>

A secondary battery was fabricated by the same method as in Example 6 except that the mass ratio of the Si-containing particles, the first carbon material, and the second carbon material was set to 85:10:5, and artificial graphite having a D50 of 15 μm was used as the second carbon material.

[Evaluation of Cycle Characteristics (Measurement of Capacity Retention Ratio)]

For each of the secondary batteries of Examples and Comparative Examples, CCCV charge (current of 0.1 It, cutoff voltage of 0.005 V, cutoff current of 0.01 It) was carried out in a temperature environment of 25°C, and then CV discharge (current of 0.1 It, cutoff voltage of 1.5 V) was carried out. This charge/discharge counted as one cycle was carried out for 10 cycles, and the capacity retention ratio of each battery was calculated by the following formula. The evaluation results are shown in Table 1 together with the D/G ratios in the Raman spectrum of the Si-based active material.

Capacity retention ratio = (Discharging capacity in the 10th cycle/Discharging capacity in the 1st cycle) × 100

[Table 1]

| | D/G ratio | | | Capacity retention ratio |
|---|---|---|---|---|
| | Carbon material adhered to core particles | First carbon material | Second carbon material | |
| Comparative Example 1 | 0.90 | 0.9 | - | 0.913 |
| Comparative Example 2 | 1.41 | 1.4 | - | 0.906 |
| Comparative Example 3 | 0.17 | - | 0.17 | 0.921 |
| Comparative Example 4 | 0.22 | - | 0.22 | 0.913 |
| Comparative Example 5 | 0.02 | - | 0.02 | 0.875 |
| Comparative Example 6 | 0.95 | 0.9 | 0.22 | 0.932 |
| Example 1 | 0.83 | 0.9 | 0.17 | 0.954 |

(continued)

| | D/G ratio | | | Capacity retention ratio |
| --- | --- | --- | --- | --- |
| | Carbon material adhered to core particles | First carbon material | Second carbon material | |
| Example 2 | 0.87 | 0.9 | 0.22 | 0.956 |
| Example 3 | 0.89 | 0.9 | 0.22 | 0.950 |
| Example 4 | 0.59 | 0.9 | 0.22 | 0.967 |
| Example 5 | 0.52 | 0.9 | 0.22 | 0.971 |
| Example 6 | 0.34 | 0.9 | 0.02 | 0.970 |
| Example 7 | 0.20 | 0.9 | 0.02 | 0.968 |
| Example 8 | 0.83 | 1.4 | 0.17 | 0.960 |
| Example 9 | 0.89 | 0.9 | 0.48 | 0.954 |

As shown in Table 1, all the batteries of Examples exhibit higher capacity retention ratios and excellent cycle characteristics than the batteries of Comparative Examples. Namely, use of two types of carbon materials having D/G ratios of from 0.8 to 2 and from 0.01 to 0.5, respectively, and use of the Si-based active material having the D/G ratio adjusted to from 0.2 to 0.9 significantly improves the cycle characteristics of the batteries. When either the first carbon material or the second carbon material is not present on the surfaces of the core particles, or when the conditions of the above D/G ratios are not satisfied, the reduction in the negative electrode capacity accompanying charge/discharge becomes large.

REFERENCE SIGNS LIST

10 secondary battery, 11 positive electrode, 12 negative electrode, 13 separator, 14 electrode assembly, 16 outer can, 17 sealing assembly, 18, 19 insulating plate, 20 positive electrode lead, 21 negative electrode lead, 22 grooved portion, 23 internal terminal plate, 24 lower vent member, 25 insulating member, 26 upper vent member, 27 cap, 28 gasket, 30 Si-based active material, 31 core particle, 32 first carbon material, 33 second carbon material

**Claims**

1. A negative electrode active material for secondary batteries, including:

   core particles in each of which Si particles are dispersed in a silicon oxide phase or a silicate phase; and
   a carbon material adhered to surfaces of the core particles, wherein
   when a ratio of a peak intensity of a D band to a peak intensity of a G band in a Raman spectrum is defined as a D/G ratio,
   the carbon material includes a first carbon material having a D/G ratio of 0.8 to 2 and a second carbon material having a D/G ratio of 0.01 to 0.5, and
   the D/G ratio of the carbon material is 0.2 to 0.9.

2. The negative electrode active material for secondary batteries according to claim 1, wherein

   the first carbon material is present in an amount of 5 to 20% by mass based on a mass of the negative electrode active material for secondary batteries, and
   the second carbon material is present in an amount of 5 to 70% by mass based on a mass of the negative electrode active material for secondary batteries.

3. The negative electrode active material for secondary batteries according to claim 1 or 2, wherein the first carbon material is present in a layer on the surfaces of the core particles.

4. The negative electrode active material for secondary batteries according to any one of claims 1 to 3, wherein the second carbon material is in a particulate form.

5. A secondary battery, comprising:

a negative electrode including the negative electrode active material according to any one of claims 1 to 4; a positive electrode; and an electrolyte.

# Figure 1

# Figure 2

**EP 3 993 103 A1**

<table>
<tr><td colspan="3" align="center">INTERNATIONAL SEARCH REPORT</td><td colspan="2">International application No.<br>PCT/JP2020/024744</td></tr>
</table>

A. CLASSIFICATION OF SUBJECT MATTER

H01M 4/36(2006.01)i; H01M 4/38(2006.01)i; H01M 4/48(2010.01)i; H01M 4/58(2010.01)i

FI: H01M4/38 Z; H01M4/36 C; H01M4/36 E; H01M4/48; H01M4/58

According to International Patent Classification (IPC) or to both national classification and IPC

B. FIELDS SEARCHED

Minimum documentation searched (classification system followed by classification symbols)

H01M4/36; H01M4/38; H01M4/48; H01M4/58

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-523674 A (LG CHEM, LTD.) 04.10.2012 (2012-10-04) | 1-5 |
| A | WO 2018/203599 A1 (LG CHEM, LTD.) 08.11.2018 (2018-11-08) | 1-5 |
| A | JP 2015-210962 A (HITACHI CHEMICAL CO., LTD.) 24.11.2015 (2015-11-24) | 1-5 |
| A | WO 2016/136178 A1 (SANYO ELECTRIC CO., LTD.) 01.09.2016 (2016-09-01) | 1-5 |
| A | WO 2015/098024 A1 (SANYO ELECTRIC CO., LTD.) 02.07.2015 (2015-07-02) | 1-5 |
| A | JP 2018-32648 A (SHIN-ETSU CHEMICAL CO., LTD.) 01.03.2018 (2018-03-01) | 1-5 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 August 2020 (14.08.2020) | 25 August 2020 (25.08.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**EP 3 993 103 A1**

**INTERNATIONAL SEARCH REPORT**
Information on patent family members

International application No.

PCT/JP2020/024744

| Patent Documents referred in the Report | Publication Date | Patent Family | Publication Date |
|---|---|---|---|
| JP 2012-523674 A | 04 Oct. 2012 | US 2012/0077087 A1<br>WO 2010/120011 A1<br>KR 10-2010-0113433 A | |
| WO 2018/203599 A1 | 08 Nov. 2018 | EP 3598540 A1<br>KR 10-2018-0122871 A<br>CN 110612625 A | |
| JP 2015-210962 A | 24 Nov. 2015 | (Family: none) | |
| WO 2016/136178 A1 | 01 Sep. 2016 | US 2018/0040886 A1<br>CN 107112499 A | |
| WO 2015/098024 A1 | 02 Jul. 2015 | CN 105849948 A | |
| JP 2018-32648 A | 01 Mar. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000215887 A
- JP 2000272911 A